# EUROPEAN PATENT SPECIFICATION

(11) **EP 3 131 802 B1**
(45) Date of publication and mention of the grant of the patent: **21.11.2018**
(21) Application number: 16715093.7
(22) Date of filing: 02.03.2016
(51) Int. Cl.: B61G 11/16

(54) **IMPACT ENERGY ABSORBER**
STOSSENERGIE-VERZEHRVORRICHTUNG
ABSORBEUR D'ÉNERGIE D'IMPACT

(30) Priority: 05.03.2015 PL 41148315
(43) Date of publication of application: 22.02.2017
(73) Proprietor: AXTONE Spólka Akcyjna, 37-220 Kanczuga (PL)
(72) Inventor: KUKULSKI, Jan, 37-112 Kosina (PL); WASILEWSKI, Leszek, 37-203 Gniewczyna (PL)
(74) Representative: Patpol Kancelaria Patentowa Sp. z o.o.
(86) International application number: PCT/IB2016/051174
(87) International publication number: WO 2016/139596

(56) References cited:
- DE-A1- 10 145 446
- NL-A- 7 502 142

## Description

The present invention refers to a device which absorbs impact energy in structural units connecting rail vehicles.

Document NL7502 142 A discloses a device for absorbing impact energy in structural units connecting rail vehicles which comprises an energy absorbing element whose selected parts are machinable, cutting tools which surround the energy absorbing element and are fastened in a machining unit movable parallel to the axes of selected parts of the energy absorbing element, at least one safety intermediate element which ensures the integrity of the connection between the energy absorbing element and the machining unit to a set threshold value of the impact force and allows an axial movement of the machining unit relative to the energy absorbing element when the set threshold value of the impact force has been exceeded.

Known devices perform well their task of absorbing the kinetic energy of impacts but they are unsuitable for a direct application as devices which transmit axial forces, alternating compressive and tensile ones.

The purpose of the invention is to develop a device absorbing the impact energy by means of machining, which device has an increased modulus of rigidity, transmits tractive forces, impact forces and increased lateral forces, and at the same time has a simple construction.

According to the invention, the impact energy absorber in rail vehicle units has:
- an energy absorbing element selected parts of which are machinable,
- cutting tools surrounding the energy absorbing element, fastened in the machining unit movable parallel to the axes of the selected parts of the energy absorbing element,
- at least one safety intermediate element which ensures the integrity of the connection between the energy absorbing element and the machining unit to a set threshold value of the impact force and allows an axial movement of the machining unit relative to the energy absorbing element when the set threshold value of the impact force has been exceeded.

The invention is characterized in that it comprises
- the energy absorbing element comprising a set of at least two parallel cylindrical machinable rods placed at a distance from one another,
- at least one thrust element used to transmit the tractive force between the machining unit and the rods,
- a tool mounting plate forming a part of the machining unit, seated on the rods through guiding holes, and
- a mounting plate fastened to the rods, placed at a distance from the tool mounting plate.

Preferably, the thrust element is in contact with the machining unit and has a form of a thrust ring fastened to the end part of the rod.

Preferably, the thrust element is united with the safety intermediate element coupled with the machining unit, and the safety intermediate element is a threaded sleeve. Preferably, the machining unit has a sleeve guiding part united with the tool mounting plate.

Preferably, the safety intermediate element has a threaded connection with the end part of the sleeve guiding part of the machining unit.

Preferably, there is an annular undercut between the thrust element and the safety intermediate element.

Preferably, the thrust ring has at least one recess on its circumference.

Preferably, the thrust ring is welded to the end part of the rod.

Preferably, the mounting plate is placed parallel to the tool mounting plate, and both mounting plates are seated on the opposite ends of the rods.

Preferably, the mounting plate is seated on the rod by means of a threaded connection.

Preferably, the rods are set perpendicularly to the mounting plate and to the tool mounting plate.

Preferably, the mounting plate is adapted to being connected with a joint of a bogie supporting two neighbouring rail carriages, and the tool mounting plate is adapted to being connected with a carbody load-bearing structure.

Preferably, the mounting plate and the tool mounting plate are substantially rectangular in shape.

The execution of the energy absorbing element as two parallel rods placed at a distance from one another and connected with the mounting plates also placed at a distance from one another allows to achieve the structure with an increased modulus of rigidity which is capable of transmitting greater lateral forces acting in the extreme operating conditions of the device. Such a solution allows a movement of the tool mounting plate in a perpendicular direction relative to the rods, influencing the even operation of the cutting tools.

Using a thrust element between the machining unit and the rods to transmit the tractive force allows to use the device of the invention also in the function of a coupler assembly. To this end, the device comprises also a tool mounting plate which facilitates fastening of the device of the invention to cooperating, neighbouring elements of a rail carriage on one side of the rod. On the other side of the rod, the device according to the invention is mounted to the cooperating, neighbouring elements of a rail carriage via a second mounting plate fastened at a distance from the tool mounting plate. Fastening of both plates on the rods at a distance from one another allows their movement towards each other when the pre-set threshold value of the impact force has been exceeded.

Execution of the thrust element in the form of a thrust ring fastened in the end part of the rod facilitates the assembly of the device according to the invention. Such a structure simplifies also the construction of one combined element wherein the thrust element is coupled with the safety intermediate element.

The sleeve guiding part provides an axial guiding of the tool mounting plate with the cutting tools along the rods in the situation after a break of the safety intermediate element.

The annular undercut made at the connection between the thrust element and the safety intermediate element defines the place wherein the safety intermediate element is tom away from the thrust ring when the pre-set threshold value of the impact force has been exceeded.

The invention is presented in its embodiment in the drawing, where
Fig. 1 presents the impact energy absorber according to the invention at rest, before impact, in axial section;
Fig. 2 presents the impact energy absorber from the side of the tool mounting plate;
Fig. 3 presents a perspective view of the impact energy absorber;
Fig. 4 shows an enlarged detail of the connection between the rod and the sleeve guiding part;
Fig. 5 presents the thrust ring with the safety intermediate element in a half section;
Fig. 6a presents the connection of the device of the invention with structural units of 10 rail carriages in a schematic top view;
Fig. 6b presents the device of the invention with structural units of rail carriages in a schematic lateral view; and
Fig. 7 shows the impact energy absorber at work.

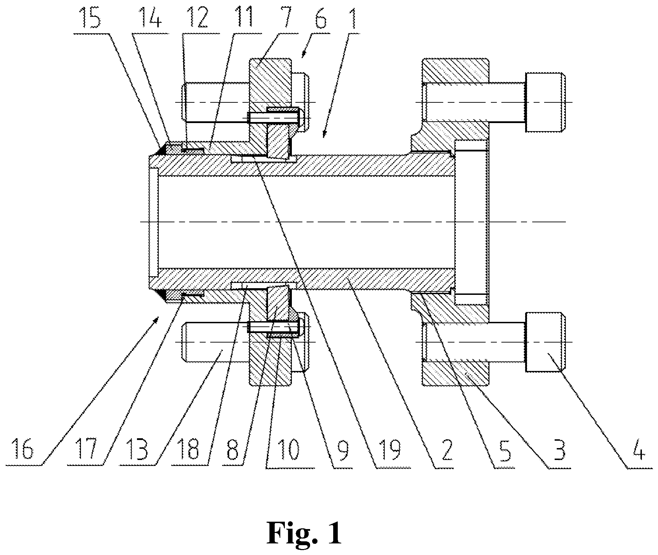

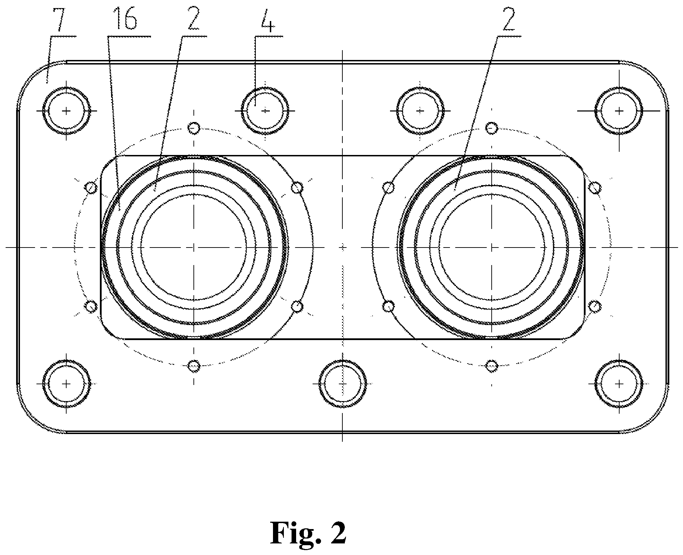

As presented in the embodiment in Fig. 1 and Fig. 2, the impact energy absorber for structural units connecting rail carriages according to the invention comprises an energy absorbing element 1 which is a set of two steel rods 2 made in the form of machinable sleeves or bars. At one end of each rod 2 there is fastened a mounting plate 3 with bolts 4 which connects the device of the invention with structural units connecting rail carriages. The connection between the mounting plate 3 and the rods 2 is a robust threaded connection 5 which is capable of transmitting both the tractive force and the impact force. This connection is to prevent the shift of the mounting plate 3 relative to the rod 2 at any load conditions. In the vicinity of the other end of each rod 2 there is a machining unit 6 comprising a tool mounting plate 7 with cutting tools 8 placed in the recesses and pressed by bolts 9 via pressure elements 10. The tool mounting plate 7 is fastened to the rods 2 via a sleeve guiding part 11 by means of safety intermediate elements 12 capable of breaking at the action of pre-set impact force. The tool mounting plate 7 can be connected with the structural unit of the rail carriage by means of bolts 13. The safety intermediate elements 12 have a shape of sleeves loosely surrounding the surface of the rods 2, and each of the safety intermediate elements 12 is united with the thrust ring 14 durably connected by a welded joint 15 with the end surface of the rod 2. The thrust ring 14 connected by the welded joint 15 with the rod 2 constitutes the thrust element 16. The task of this thrust element 16 is to transmit the pressure of the sleeve guiding part 11 caused by the tractive force. Moreover, the thrust element 16 should not be destroyed at any impact force. When the threshold value of the impact force is reached, which initiates the absorption of kinetic energy by the device of the invention, only the safety intermediate element 12 gets damaged.

In the embodiment presented in Fig. 1, the damage of the safety intermediate element 12, in the form of a ruptured connection between the rod 2 and the sleeve guiding part 11 of the machining unit 6, can involve breaking of the sleeve guiding part 11 in the vicinity of the thrust ring 14, in the location where this safety intermediate element 12 has the least tensile strength, which in practice is the place where its cross-section is the smallest. In an alternative solution, the integrity limit of connection between the rod 2 and the machining unit 6 can be determined by the shear strength of a thread 17 of the safety intermediate element 12. Before breaking of the safety intermediate element 12, the blades of cutting tools 8 are placed in the set position in guiding undercuts 18 formed on the side surface of the rod 2. A part of the rods 2 between the guiding undercuts 18 and the mounting plate 3 has a hardness appropriately selected to be machinable with the cutting tools 8 and to ensure an optimized absorption of kinetic energy of the impact. During the machining, the cutting tools 8 are guided parallel to the axes of selected parts of the rods 2.

The tool mounting plate 7 is parallel to the mounting plate 3, both before and after breaking of the safety intermediate element 12. The parallel guiding of the tool mounting plate 7 after breaking of the safety intermediate element is a result of a slide mounting of the perpendicular rods 2 in guiding holes 19 of the tool mounting plate 7.

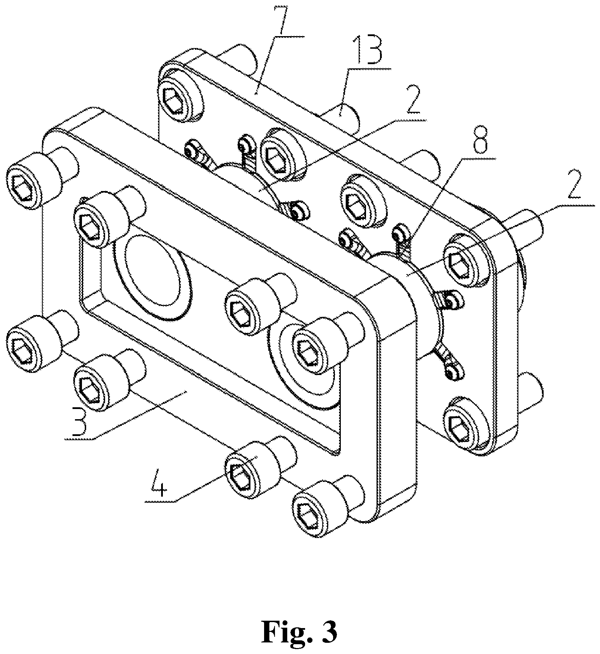

As shown in Fig. 3, the mounting plate 3 and the tool mounting plate 7 are mounted on two cylindrical rods 2 placed at a distance from one another. The rods 2 are parallel to each other, wherein after fastening them to the cooperating structural units of rail carriages the axes of the rods 2 are in the horizontal plane. Such connection of the mounting plates 3, 7 and the rods 2 makes up a frame structure with high modulus of rigidity. The bending strength of such a unit in the horizontal plane depends on the bending strength of each rod 2, and particularly on the distance between these rods. By increasing the number of the rods 2 and by placing them between the mounting plates 3, 7 in many planes, one can increase the modulus of rigidity of the whole device.

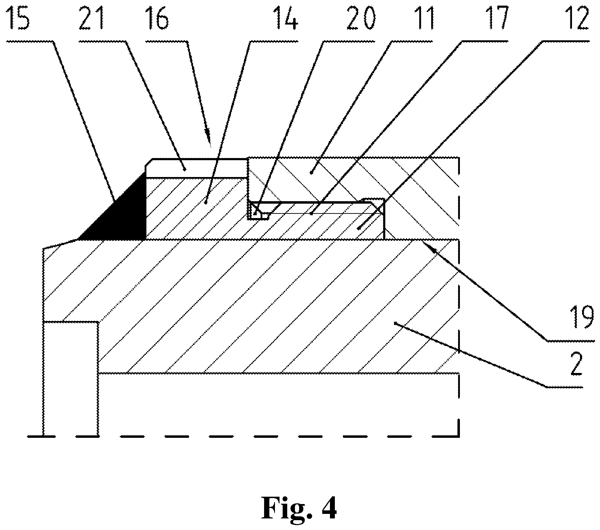

Fig. 4 presents the structural detail of the connection between the rod 2 and the sleeve guiding part 11. The rod 2 is mounted with play in the hole 19 of the sleeve guiding part 11, and at the same time the rod is secured against an axial shift relative to the sleeve guiding part 11 by means of the safety intermediate element 12 which is permanently connected with the rod 2. The safety intermediate element 12 is a sleeve with male thread, screwed into the female thread of the end of the sleeve guiding part 11. In addition, the safety intermediate element 12 is united with the thrust element 16 in the form of the thrust ring 14 welded to the end part of the rod 2. When the threshold impact force occurs causing the breaking of the safety intermediate elements 12, the kinetic energy starts to be absorbed by machining of the rod 2. This threshold impact force is therefore a function of the tension strength and the least cross-sectional area of the safety intermediate element 12. In order to determine this threshold force with more accuracy, an annular undercut 20 is shaped between the safety intermediate element 12 and the thrust ring 14.

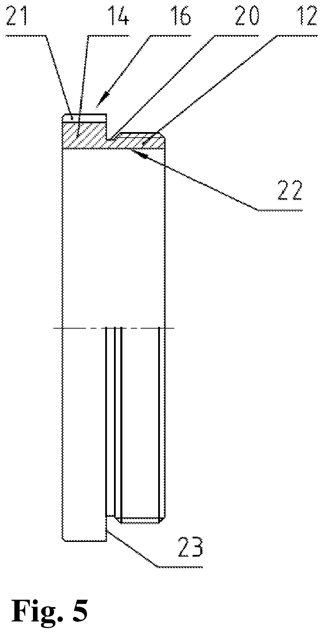

The structure of the thrust element 16 as a component, before installing in the device of the invention, is presented with more detail in Fig. 5. As shown in Fig. 4 and Fig. 5, the thrust ring 14 is connected by means of the annular undercut 20 with the safety intermediate element 12. A recess 21 on the circumference of the thrust ring is used to transfer the torque during the installation of the thrust element 16 in the sleeve guiding part 11. The thickness of the welded joint 15 permanently connecting the thrust ring 14 with the end part of the rod 2 is sufficient to transmit all possible forces acting on the device according to the invention, that is forces appearing during a crash, which compress the rod 2, as well as dynamic tractive forces which tension the rod 2. The internal hole 22 of the thrust element 16 is to be seated on the surface of the rod 2, so its diameter is the same as the diameter of the guiding hole 19 in the tool mounting plate. The outside diameter of the safety intermediate element 12 is adequately smaller than the outside diameter of the thrust ring 14 to provide a sufficient contact area 23 between that ring and the sleeve guiding part 11.

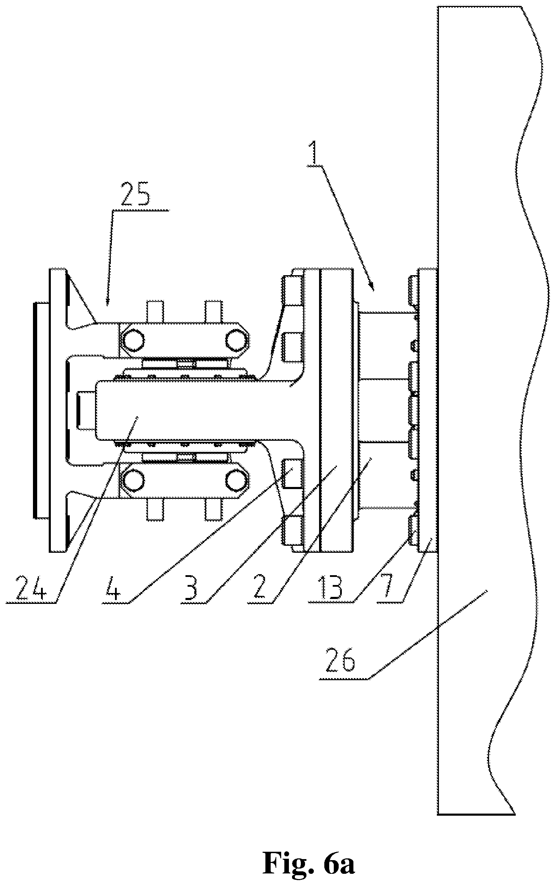

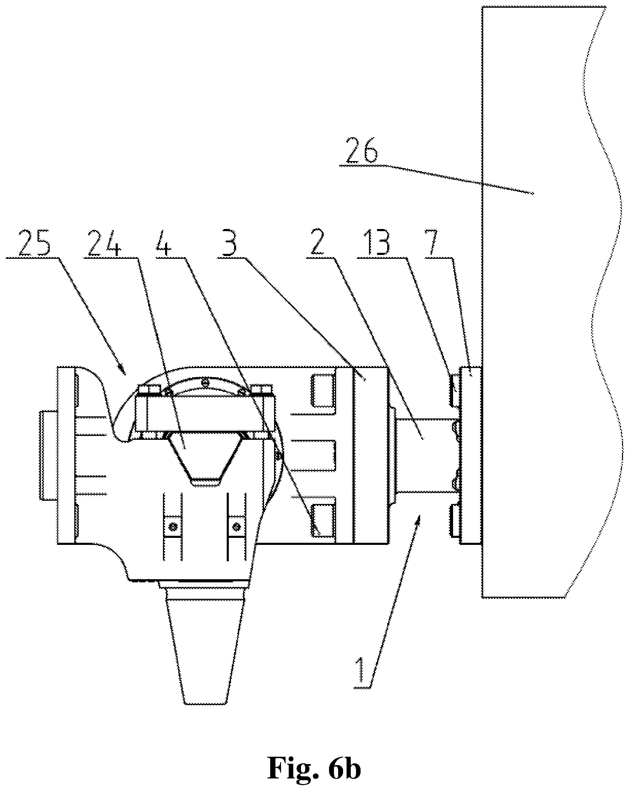

As shown in Fig. 6a and Fig. 6b, the mounting plate 3 is connected by means of bolts 4 with a joint 24 of a Jacobs bogie 25, and the tool mounting plate is connected by means of bolts 13 with a carbody load-bearing structure 26. The energy absorbing element 1 is made as two parallel rods 2 placed at a distance from one another which transmit the tensile stresses caused by the tractive force and at the same time are capable of absorbing the impact energy.

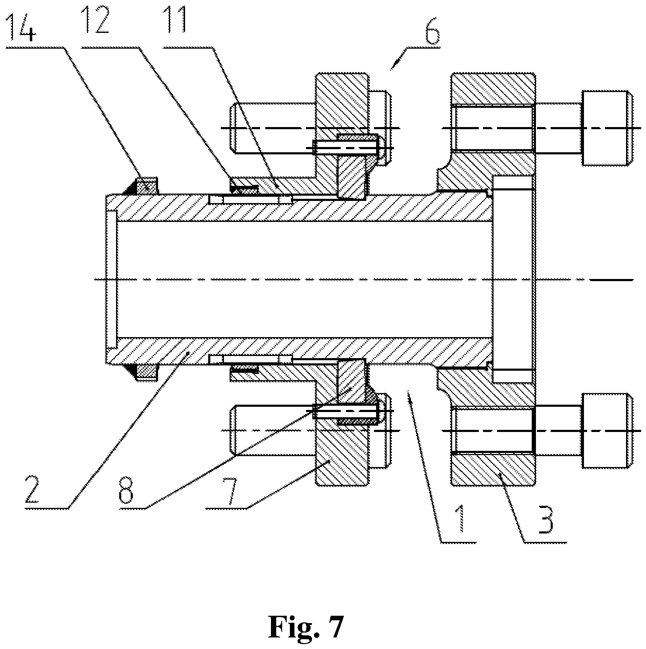

Fig. 7 presents the device of the invention at the stage of absorbing the kinetic energy of impact. In case of the occurrence of the threshold force acting on the tool mounting plate 7 and pressing against the rod 2, the safety intermediate element 12 detaches from the welded thrust ring 14 in the area of the least cross-sectional area. This frees the machining unit 6 which travels along the axis of the rod 2 towards the mounting plate 3, and the cutting tools 8 machine the surface of the rod 2, thus absorbing the kinetic energy of impact. The parallel guiding of the tool mounting plate 7 relative to the mounting plate 3 is ensured by using the sleeve guiding part 11 slide-mounted on the rod 2.

### List of reference numbers:

- 1: - energy absorbing element
- 2: - rod
- 3: - mounting plate
- 4: - bolts
- 5: - threaded connection
- 6: - machining unit
- 7: - tool mounting plate
- 8: - cutting tool
- 9: - bolts
- 10: - pressure elements
- 11: - sleeve guiding part
- 12: - safety intermediate element
- 13: - bolts
- 14: - thrust ring
- 15: - welded joint
- 16: - thrust element
- 17: - thread
- 18: - guiding undercuts
- 19: - guiding hole
- 20: - annular undercut
- 21: - recess
- 22: - internal hole
- 23: - contact area
- 24: - joint
- 25: - Jacobs bogie
- 26: - carbody load-bearing structure

## Claims

1. A device absorbing impact energy in structural units connecting rail vehicles which comprises:
an energy absorbing element (1) whose selected parts are machinable,
cutting tools (8) which surround the energy absorbing element (1) and are fastened in a machining unit (6) movable parallel to the axes of selected parts of the energy absorbing element (1),
at least one safety intermediate element (12) which ensures the integrity of the connection between the energy absorbing element (1) and the machining unit (6) to a set threshold value of the impact force and allows an axial movement of the machining unit (6) relative to the energy absorbing element (1) when the set threshold value of the impact force has been exceeded,
**characterized in that** it contains:
the energy absorbing element (1) comprising a set of at least two parallel cylindrical machinable rods (2) placed at a distance from one another,
at least one thrust element (16) used to transmit the tractive force between the machining unit (6) and the rods (2),
a tool mounting plate (7) forming a part of the machining unit (6) seated on the rods (2) through guiding holes (19), and
a mounting plate (3) fastened to the rods (2), placed at a distance from the tool mounting plate (7).

2. The device according to claim 1, **characterized in that** the thrust element (16) is in contact with the machining unit (6) and has a form of a thrust ring (14) fastened to the end part of the rod (2).

3. The device according to claim 1 or 2, **characterized in that** the thrust element (16) is united with the safety intermediate element (12) coupled with the machining unit (6).

4. The device according to claim 3, **characterized in that** the safety intermediate element (12) is a threaded sleeve.

5. The device according to any of claims 1 to 4, **characterized in that** the machining unit (6) has a sleeve guiding part (11) united with the tool mounting plate (7).

6. The device according to claim 5, **characterized in that** the safety intermediate element (12) has a threaded connection with the end part of the sleeve guiding part (11) of the machining unit (6).

7. The device according to any of claims 3 to 6, **characterized in that** there is an annular undercut (20) between the thrust element (16) and the safety intermediate element (12).

8. The device according to any of claims 2 to 7, **characterized in that** the thrust ring (14) has at least one recess (21) on its circumference.

9. The device according to any of claims 2 to 8, **characterized in that** the thrust ring (14) is welded to the end part of the rod (2).

10. The device according to any of claims 1 to 9, **characterized in that** the mounting plate (3) is placed parallel to the tool mounting plate (7), and both mounting plates (3, 7) are seated on the opposite ends of the rods (2).

11. The device according to any of claims 1 to 10, **characterized in that** the mounting plate (3) is seated on the rod (2) by means of a threaded connection.

12. The device according to any of claims 1 to 11, **characterized in that** the rods (2) are set perpendicular to the mounting plate (3) and to the tool mounting plate (7).

13. The device according to any of claims 1 to 12, **characterized in that** the mounting plate (3) is adapted to being connected with a joint (24) of a bogie supporting two neighbouring rail carriages, and the tool mounting plate (7) is adapted to being connected with a carbody load-bearing structure (26).

14. The device according to any of claims 1 to 13, **characterized in that** the mounting plate (3) and the tool mounting plate (7) are substantially rectangular in shape.

## Patentansprüche

1. Vorrichtung zum Absorbieren von Aufprallenergie in Struktureinheiten, die Schienenfahrzeuge verbinden, die umfasst:
ein Energieabsorptionselement (1), dessen ausgewählte Teile maschinell bearbeitet werden können,
Schneidwerkzeuge (8), die das Energieabsorptionselement (1) umgeben und in einer Bearbeitungseinheit (6) befestigt sind, die parallel zu den Achsen ausgewählter Teile des Energieabsorptionselements (1) beweglich ist,
mindestens ein Sicherheitszwischenelement (12), das die Unversehrtheit der Verbindung zwischen dem Energieabsorptionselement (1) und der Bearbeitungseinheit (6) bis zu einem eingestellten Schwellenwert der Aufprallkraft gewährleistet und bei Überschreitung des eingestellten Schwellenwertes der Aufprallkraft eine axiale Bewegung der Bearbeitungseinheit (6) relativ zum Energieabsorptionselement (1) ermöglicht,
**dadurch gekennzeichnet, dass** es enthält:
das Energieabsorptionselement (1), umfassend einen Satz von mindestens zwei parallelen zylindrischen, bearbeitungsfähigen Stangen (2), die in einem Abstand voneinander angeordnet sind,
mindestens ein Schubelement (16), das zur Übertragung der Zugkraft zwischen der Bearbeitungseinheit (6) und den Stangen (2) verwendet wird,
eine Werkzeugmontageplatte (7), die einen Teil der Bearbeitungseinheit (6) bildet, die durch Führungslöcher (19) auf den Stangen (2) sitzt, und
eine an den Stangen (2) befestigte Montageplatte (3), die in einem Abstand von der Werkzeugmontageplatte (7) angeordnet ist.

2. Vorrichtung nach Anspruch 1, **dadurch gekennzeichnet, dass** das Schubelement (16) mit der Bearbeitungseinheit (6) in Kontakt steht und die Form eines Schubrings (14) aufweist, der am Endteil der Stange (2) befestigt ist.

3. Vorrichtung nach Anspruch 1 oder 2, **dadurch gekennzeichnet, dass** das Schubelement (16) mit dem Sicherheitszwischenelement (12) vereint ist, das mit der Bearbeitungseinheit (6) verbunden ist.

4. Vorrichtung nach Anspruch 3, **dadurch gekennzeichnet, dass** das Sicherheitszwischenelement (12) eine Gewindehülse ist.

5. Vorrichtung nach einem der Ansprüche 1 bis 4, **dadurch gekennzeichnet, dass** die Bearbeitungseinheit (6) ein Hülsenführungsteil (11) aufweist, das mit der Werkzeugmontageplatte (7) vereint ist.

6. Vorrichtung nach Anspruch 5, **dadurch gekennzeichnet, dass** das Sicherheitszwischenelement (12) eine Gewindeverbindung mit dem Endteil des Hülsenführungsteils (11) der Bearbeitungseinheit (6) aufweist.

7. Vorrichtung nach einem der Ansprüche 3 bis 6, **dadurch gekennzeichnet, dass** zwischen dem Schubelement (16) und dem Sicherheitszwischenelement (12) eine ringförmige Hinterschneidung (20) vorliegt.

8. Vorrichtung nach einem der Ansprüche 2 bis 7, **dadurch gekennzeichnet, dass** der Schubring (14) an seinem Umfang mindestens eine Vertiefung (21) aufweist.

9. Vorrichtung nach einem der Ansprüche 2 bis 8, **dadurch gekennzeichnet, dass** der Schubring (14) mit dem Endteil der Stange (2) verschweißt ist.

10. Vorrichtung nach einem der Ansprüche 1 bis 9, **dadurch gekennzeichnet, dass** die Montageplatte (3) parallel zur Werkzeugmontageplatte (7) angeordnet ist und beide Montageplatten (3, 7) auf den gegenüberliegenden Enden der Stangen (2) sitzen.

11. Vorrichtung nach einem der Ansprüche 1 bis 10, **dadurch gekennzeichnet, dass** die Montageplatte (3) mittels einer Gewindeverbindung auf der Stange (2) sitzt.

12. Vorrichtung nach einem der Ansprüche 1 bis 11, **dadurch gekennzeichnet, dass** die Stangen (2) senkrecht zur Montageplatte (3) und zur Werkzeugmontageplatte (7) angeordnet sind.

13. Vorrichtung nach einem der Ansprüche 1 bis 12, **dadurch gekennzeichnet, dass** die Montageplatte (3) eingerichtet ist, um mit einem Gelenk (24) eines Drehgestells verbunden zu werden, das zwei benachbarte Schienenwagen trägt, und die Werkzeugmontageplatte (7) eingerichtet ist, um mit einer Karosserielastaufnahmestruktur (26) verbunden zu werden.

14. Vorrichtung nach einem der Ansprüche 1 bis 13, **dadurch gekennzeichnet, dass** die Montageplatte (3) und die Werkzeugmontageplatte (7) eine im Wesentlichen rechteckige Form aufweisen.

## Revendications

1. Dispositif absorbant l'énergie d'impact dans des unités structurelles reliant des véhicules ferroviaires qui comprend :
un élément d'absorption d'énergie (1) dont certaines parties choisies peuvent être usinées,
des outils de coupe (8) qui entourent l'élément absorbant l'énergie (1) et sont fixés dans une unité d'usinage (6) mobile parallèlement aux axes des parties choisies de l'élément d'absorption d'énergie (1),
au moins un élément intermédiaire de sécurité (12) assurant l'intégrité de la liaison entre l'élément absorbant l'énergie (1) et l'unité d'usinage (6) à une valeur seuil de consigne de la force d'impact et permet un déplacement axial de l'unité d'usinage (6) par rapport à l'élément d'absorption d'énergie (1) lorsque la valeur seuil de consigne de la force d'impact a été dépassée,
**caractérisé en ce qu'**il contient :
l'élément d'absorption d'énergie (1) comprenant un ensemble d'au moins deux tiges pouvant être usinées cylindriques parallèles (2) placées à distance l'une de l'autre,
au moins un élément de poussée (16) utilisé pour transmettre la force de traction entre l'unité d'usinage (6) et les tiges (2),
une plaque de montage d'outil (7) faisant partie de l'unité d'usinage (6) logée sur les tiges (2) par le biais de trous de guidage (19) et
une plaque de montage (3) fixée aux tiges (2), placée à distance de la plaque de montage d'outil (7).

2. Dispositif selon la revendication 1, **caractérisé en ce que** l'élément de poussée (16) est en contact avec l'unité d'usinage (6) et présente une forme de bague de poussée (14) fixée à la partie d'extrémité de la tige (2).

3. Dispositif selon la revendication 1 ou 2, **caractérisé en ce que** l'élément de poussée (16) est solidaire de l'élément intermédiaire de sécurité (12) couplé à l'unité d'usinage (6).

4. Dispositif selon la revendication 3, **caractérisé en ce que** l'élément intermédiaire de sécurité (12) est un manchon fileté.

5. Dispositif selon l'une quelconque des revendications 1 à 4, **caractérisé en ce que** l'unité d'usinage (6) comporte une partie de guidage de manchon (11) solidaire de la plaque de montage d'outil (7).

6. Dispositif selon la revendication 5, **caractérisé en ce que** l'élément intermédiaire de sécurité (12) présente une liaison filetée avec la partie d'extrémité de la partie de guidage de manchon (11) de l'unité d'usinage (6).

7. Dispositif selon l'une quelconque des revendications 3 à 6, **caractérisé en ce qu'**il y a une contre-dépouille annulaire (20) entre l'élément de poussée (16) et l'élément intermédiaire de sécurité (12).

8. Dispositif selon l'une quelconque des revendications 2 à 7, **caractérisé en ce que** la bague de poussée (14) présente sur sa circonférence au moins un évidement (21).

9. Dispositif selon l'une quelconque des revendications 2 à 8, **caractérisé en ce que** la bague de poussée (14) est soudée à la partie d'extrémité de la tige (2).

10. Dispositif selon l'une quelconque des revendications 1 à 9, **caractérisé en ce que** la plaque de montage (3) est disposée parallèlement à la plaque de montage d'outil (7) et les deux plaques de montage (3, 7) reposent sur les extrémités opposées des tiges (2).

11. Dispositif selon l'une quelconque des revendications 1 à 10, **caractérisé en ce que** la plaque de montage (3) repose sur la tige (2) au moyen d'une liaison filetée.

12. Dispositif selon l'une quelconque des revendications 1 à 11, **caractérisé en ce que** les tiges (2) sont disposées perpendiculairement à la plaque de montage (3) et à la plaque de montage d'outil (7).

13. Dispositif selon l'une quelconque des revendications 1 à 12, **caractérisé en ce que** la plaque de montage (3) est conçue pour être reliée (24) avec un joint d'un bogie supportant deux chariots ferroviaires voisins et la plaque de montage d'outil (7) est conçue pour être reliée à une structure de support de charge (26) de caisse.

14. Dispositif selon l'une quelconque des revendications 1 à 13, **caractérisé en ce que** la plaque de montage (3) et la plaque de montage d'outil (7) sont de forme sensiblement rectangulaire.
